# EUROPÄISCHE PATENTSCHRIFT

(11) **EP 3 890 971 B1**
(45) Veröffentlichungstag und Bekanntmachung des Hinweises auf die Patenterteilung: **28.08.2024**
(21) Anmeldenummer: 19806004.8
(22) Anmeldetag: 26.11.2019
(51) Int. Cl.: B32B 27/20, B32B 27/28, B32B 27/30, B32B 27/32, B32B 27/36, B32B 27/40, B32B 38/14, B32B 3/26, B42D 25/30, B42D 25/23, B42D 25/45

(54) **KUNSTSTOFFFOLIEN MIT HOHER VICAT-ERWEICHUNGSTEMPERATUR IN SCHICHTAUFBAUTEN**
PLASTIC FILMS WITH HIGH VICAT SOFTENING POINT IN COATING STRUCTURES
FEUILLES EN MATIÈRE PLASTIQUE À TEMPÉRATURE DE RAMOLLISSEMENT VICAT PLUS ÉLEVÉE DANS LES STRUCTURES STRATIFIÉES

(30) Priorität: 03.12.2018 EP 18209747
(43) Veröffentlichungstag der Anmeldung: 13.10.2021
(73) Patentinhaber: Covestro Deutschland AG, 51373 Leverkusen (DE)
(72) Erfinder: TZIOVARAS, Georgios, 41464 Neuss (DE); PUDLEINER, Heinz, 47800 Krefeld (DE); PLANKEN, Kira, 47574 Goch (DE); JANKE, Stefan, 41379 Brüggen (DE); KÖHLER, Christoph, 47269 Duisburg (DE)
(74) Vertreter: Levpat
(86) Internationale Anmeldenummer: PCT/EP2019/082559
(87) Internationale Veröffentlichungsnummer: WO 2020/114834

(56) Entgegenhaltungen:
- EP-A1- 2 172 336
- WO-A1-2010/091796
- WO-A1-2017/060686

## Beschreibung

Die vorliegende Erfindung betrifft Schichtverbunde umfassend wenigstens eine opake Schicht a) und wenigstens eine transparente Schicht b), wobei die Vicat-Erweichungstemperatur B/120 bestimmt gemäß ISO 306:2004 (Methode B120 50N; 120°C) der Schicht a) ≥ 156°C, bevorzugt von ≥ 156 °C bis ≤ 250 °C, besonders bevorzugt von ≥ 156 °C bis ≤ 230 °C, ist, und wobei die Vicat-Erweichungstemperatur B/120, bestimmt gemäß ISO 306:2004 (Methode B120 50N; 120°C/h) der Schicht a) höher ist als die des thermoplastischen Kunststoffs der Schicht b), ein Verfahrung zur Herstellung von solchen Schichtverbunden sowie Sicherheitsdokumente, vorzugsweise Identifikationsdokumente umfassend einen solchen Schichtaufbau.

Sicherheitsdokumente, insbesondere Identifikationsdokumente, umfassen zunehmend Polycarbonate, meist in Form von Folien umfassend Polycarbonate. Dokumente basierend auf Polycarbonaten sind in der Regel sehr langlebig und zudem kann eine hohe Fälschungssicherheit dieser Dokumente erreicht werden. Sicherheitsdokumente enthalten in der Regel verschiedene Sicherheitsmerkmale, die mit unterschiedlichen Prüfmethoden identifiziert werden können und somit als Original oder Fälschung erkannt werden können. Beispiele für solche Fälschungssicherungen und deren Herstellverfahren sind in der WO 2017/060686 A1, EP 2 172 336 A1 und WO 2010/091796A1 beschrieben.

Dokumente aus Polycarbonat erlauben die Integration einer Vielfalt von Sicherheitselementen, die beispielsweise in der Liste der Sicherheitselemente von DSA (Document Security Alliance) aufgeführt werden. Sinnvoll ist jedoch die Integration von fünf bis maximal zehn Sicherheitselementen in einem Dokument, da beispielsweise während der Identitäts-Prüfung einer Person mittels eines Ausweises, der Prüfer nur eine kurze Zeit, in der Regel zehn bis zwanzig Sekunden, aufwenden soll. Aus diesem Grund sind Sicherheitsmerkmale, welche schnell ohne Hilfsmittel und mit einer geringen Fehlerrate erkannt werden können, besonders wünschenswert.

Beliebte Sicherheitsmerkmale sind transparente Bereiche in beispielsweise Identifikationskarten oder in Datenseiten von Reisepässen. Diese transparenten Bereiche werden auch "Fenster" genannt. In diese Fenster können Hologramme, Sicherheitsdrucke und andere Elemente eingebracht werden, welche durch Betrachtung als Original oder Fälschung erkannt werden können. Die Funktion des Sicherheitsmerkmals basiert auf der hohen Transparenz von Polycarbonat. Ist die Transparenz des Dokuments im Fenster beeinträchtigt, dann kann es sich um eine Fälschung handeln. Der Grund dafür: Beim Überkleben des Dokuments mit einer weiteren transparenten Folie, welche z.B. falsche Personalien enthält, erscheint die Veränderung in Fenster deutlich. Das Fenster erscheint bei Durchsicht weniger klar. Ebenfalls ist die Klarheit des Fensters gestört, beim Versuch das Dokument zu öffnen und wieder zu verkleben.

Die Fertigung von Fenstern in Sicherheitsdokumenten erfolgt üblicherweise durch Stanzen einer oder mehreren Öffnungen in den opak-weißen Kern des Sicherheits- und/oder Identifikationsdokuments, wie beispielsweise in ID & Secure Document News Vol. 4, Juli 2016 beschrieben wird. Dieser weiß opake Kern des Sicherheits- und/oder Identifikationsdokuments umfasst neben einem sichtbaren Sicherheitsmerkmale wie ein Hologramm (Präge- und Volumenhologramme), Sicherheitsdruck oder andere Element, weitere Sicherheitsmerkmale z. B. elektronische Bauteile wie Antennen und IC-Chips, die durch die obere weiße Schicht für den Betrachter nicht sichtbar sind. Die Öffnungen können beliebige Formen aufweisen, vorwiegend sind sie kreisrund oder elliptisch. Diese Öffnungen werden mit einem transparenten Folienstück der gleichen Form und Dicke, das separat aus einem entsprechenden Folienstück ausgestanzt wird, ausgefüllt. Zusätzlich können weitere transparente Folien auf die Ober- oder Unterseite des Kerns angeordnet werden. Nach der Lamination eines solchen Schichtaufbaus erhält man einen monolithischen Schichtverbund.

Ein weiteres Sicherheitsmerkmal ist das Einbetten von elektronischen Bauteilen wie beispielsweise Antennen, IC-Chips, Volumenhologramme, Prägehologramme oder ähnliches. Diese Bauteile werden üblicherweise in den Schichtverbund einlaminiert. WO2010/091796 A1 offenbart ein Verfahren zur Herstellung eines laminierten Schichtverbundes, bei welchem wenigstens eine Basisschicht und wenigstens eine weitere Schicht, zwischen denen sich ein Bauteil befindet, aus zwei thermoplastischen Materialien mit unterschiedlichen Vicat-Erweichungstemperaturen B/120 zweistufig zu einem Schichtverbund laminiert werden. Die Vicat-Erweichungstemperatur B/120 der Basisschicht hat eine höhere Vicat-Erweichungstemperatur B/120 als die weitere Schicht. Nachteilig bei dem Verfahren ist, dass zum einen ein aufwändiges zwei-stufiges Laminationsverfahren erforderlich ist und zum anderen kann es bei diesem Verfahren zum Fließen der die Antenne tragenden Schicht kommen, was Verzerren der rechtwinkligen Schenkel der Antenne führt.

Die Verwirklichung von Fenstern als Sicherheitsmerkmale ist sehr aufwändig und erfordert mehrere Arbeitsschritte hinsichtlich Stanzen und Auffüllen des Fensters mit einem transparenten Material, welches zusätzlich zu dem Materialien der einzelnen Schichten bereitgestellt werden muss. Weiterhin nachteilig ist der Verzug der Geometrie der eingestanzten Fenster während der Lamination der einzelnen Schichten zu einem laminierten Schichtverbund. Beim Einbau von elektronischen Bauteilen und/oder Volumenhologrammen ist es nachteilig, dass bei der Lamination durch das Fließen des thermoplastischen Materials während der Lamination die Geometrie des elektronischen Bauteils verzerrt wird, die Grenzschicht wellig wird und somit das Bauteil sichtbar wird. Diese Welligkeit kann zu einer Störung des darauf gedruckten Druckbildes führen.

Aufgabe der vorliegenden Erfindung bestand daher in der Bereitstellung eines Schichtaufbaus, der insbesondere nach der Lamination zu einem monolithischen Schichtverbund weitgehend verzugsfrei vorhandene Geometrien von Fenstern sowie die Einbettung von elektronischen Bauteilen und/oder weiteren Sicherheitsmerkmalen im resultierenden laminierten Schichtverbund ermöglicht und keine Störungen in aufgedruckten Druckbildern hervorruft.

Überraschenderweise wurde diese Aufgabe durch den erfindungsgemäßen Schichtaufbau umfassend wenigstens
a) eine opake Schicht a) enthaltend ein oder mehrere Polycarbonat(e) oder Copolycarbonat(e) auf Basis von Diphenolen, vorzugsweise Copolycarbonate(e) auf Basis von Diphenolen, wobei die Schicht a) eine Lichttransmission von ≥ 0,1 % und ≤ 85 %, vorzugsweise von ≥ 1 % und ≤ 65 %, besonders bevorzugt von ≥ 2 % und ≤ 50 % bestimmt gemäß ISO 13468-2:2006-07 aufweist, und
b) eine weitere transparente Schicht b) enthaltend wenigstens einen thermoplastischen Kunststoff, wobei die wenigstens eine weitere Schicht b) eine Lichttransmission von ≥ 85 % und ≤ 98 %, vorzugsweise von ≥ 87 % und ≤ 95 %, besonders bevorzugt von ≥ 88 % und ≤ 92%, bestimmt gemäß ISO 13468-2:2006-07 aufweist,

dadurch gekennzeichnet, dass die Vicat-Erweichungstemperatur B/120, bestimmt gemäß ISO 306:2004 (Methode B120 50N; 120°C/h) des einen oder mehreren Polycarbonat(en) oder Copolycarbonat(en) auf Basis von Diphenolen der Schicht a) ≥ 156 °C, bevorzugt von ≥ 156 °C bis ≤ 250 °C, besonders bevorzugt von ≥ 156 °C bis ≤ 230 °C, ist, und dass die Vicat-Erweichungstemperatur B/120, bestimmt gemäß ISO 306:2004 (Methode B120 50N; 120°C/h) der Schicht a) höher ist als die des thermoplastischen Kunststoffs der Schicht b),
wobei die wenigstens eine Schicht a) wenigstens eine Öffnung umfasst und eine Schichtdicke von ≥ 10 bis ≤ 150 µm aufweist.

In einer Ausführungsform der Erfindung umfasst die wenigstens eine Schicht b) einen thermoplastischen Kunststoff, der eine Vicat-Erweichungstemperatur von B/120, bestimmt gemäß ISO 306 (50N; 50°/h) in einem Bereich von ≥ 135 °C bis ≤ 155°C , vorzugsweise ≥ 140 °C bis ≤ 151 °C, aufweist.

Vorzugsweise weist das eine oder mehrere Polycarbonat oder Copolycarbonat auf Basis von Diphenolen der Schicht a) ein M_{w} (Gewichtsmittel des Molekulargewichts, ermittelt durch Size Exclustion Chromatographie (SCE) nach vorheriger Eichung mit Polycarbonat-Eichsubstanzen) von mindestens 10.000 g/mol, vorzugsweise von 15.000 g/mol bis 300.000 g/mol, besonders bevorzugt 17.000 bis 36.000 g/mol, ganz besonders bevorzugt 17.000 bis 34.000 g/mol. auf. Sie können linear oder verzweigt sein, sie können Homopolycarbonate oder Copolycarbonate sein.

In einer bevorzugten Ausführungsform umfasst in Schicht a) das eine oder mehrere Polycarbonat(e) oder Copolycarbonat(e) auf Basis von Diphenolen, vorzugsweise Copolycarbonat(e) auf Basis von Diphenolen, mindestens eine Carbonatstruktureinheit der Formel (I-1) 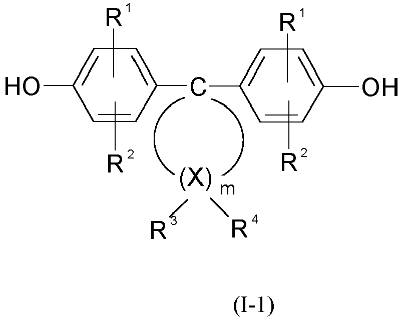 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder Ci-Ce-Alkyl und
X Kohlenstoff und/oder Stickstoff bedeuten,
mit der Maßgabe, dass an mindestens einem Atom X, R³ und R⁴ gleichzeitig Alkyl bedeuten.

Alternativ kann es sich bei dem einen oder mehreren Polycarbonat(en) oder Copolycarbonat(en) auf Basis von Diphenolen, vorzugsweise Copolycarbonat(en) auf Basis von Diphenolen um solche handeln, die mindestens eine Carbonatstruktureinheit der Formeln (I-2), (1-3) und/oder (I-4) umfassend, die nachfolgend gezeigt sind. 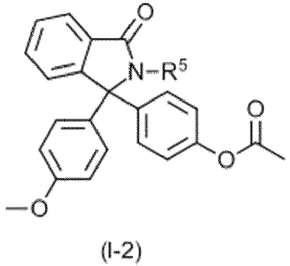 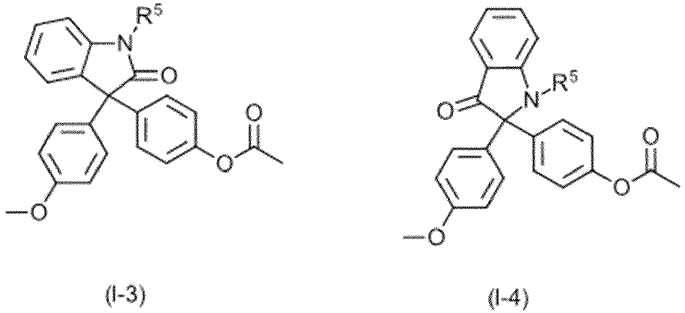 worin R⁵ für einen C₁- bis C₄-Alkylrest, Aralkylrest oder Arylrest, bevorzugt für einen Methylrest oder Phenylrest, ganz besonders bevorzugt für einen Methylrest, steht.

In einer besonders bevorzugten Ausführungsform umfasst in Schicht a) das eine oder mehrere Polycarbonat oder Copolycarbonat auf Basis von Diphenolen mindestens eine Carbonatstruktureinheit der Formel (I-1).

Die Herstellung dieser Polycarbonate oder Copolycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf H. Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Ausgangsprodukte für die Realisierung von Polycarbonatstruktureinheiten gemäß Formel (I-1) sind Dihydroxydiphenylcycloalkane der Formel (I-1a) 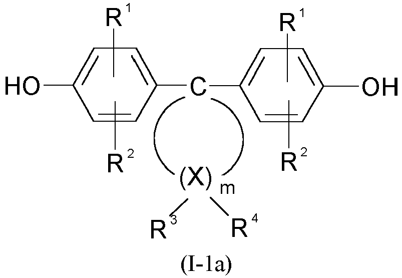 worin
X, R¹, R², R³, R⁴ und m die für die Formel (I-1) genannte Bedeutung haben.

Ausgangsprodukte für die Realisierung von Polycarbonatstruktureinheiten gemäß Formel (I-2), (I-3) und/oder (I-4) sind Dihydroxydiphenylcycloalkane der Formel (I-2a), (I-3a) und/oder (I-4a) 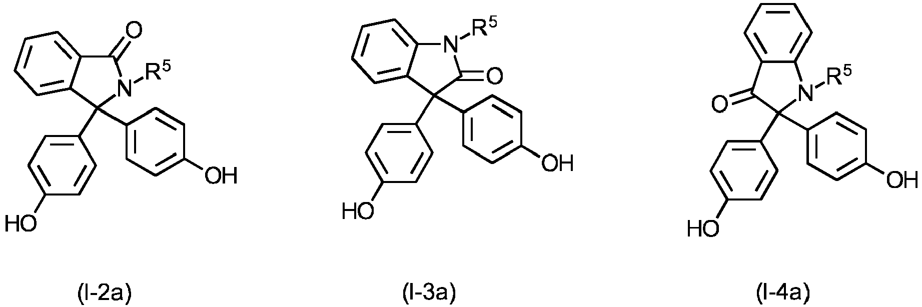 worin R⁵ für einen C₁- bis C₄-Alkylrest, Aralkylrest oder Arylrest, bevorzugt für einen Methylrest oder Phenylrest, ganz besonders bevorzugt für einen Methylrest, steht.

Vorzugsweise sind in Formel (I-1a) die Reste R1 und R2 Wasserstoff.

Bevorzugt sind in Formel (I-1a) an 1-2 Atomen X, insbesondere nur an einem Atom X, R³ und R⁴ gleichzeitig Alkyl.

Bevorzugter Alkylrest in Formel (I-1a) für R³, R⁴ ist Methyl; die X-Atome in alpha-Stellung zu dem Diphenylsubstituierten C-Atom (C-1) sind bevorzugt nicht dialkylsubstituiert, und mindestens ein X-Atom in beta -Stellung zu C-1 ist bevorzugt Alkyl disubstituiert.

Bevorzugt sind in Formel (I-1a) Dihydroxydiphenylcycloalkane mit 5 und 6 Ring-C-Atomen im cycloaliphatischen Rest (m = 4 oder 5 in Formel (I-1a)), beispielsweise die Diphenole der Formeln (I-1b) bis (I-1d), 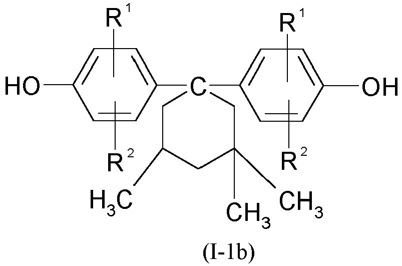 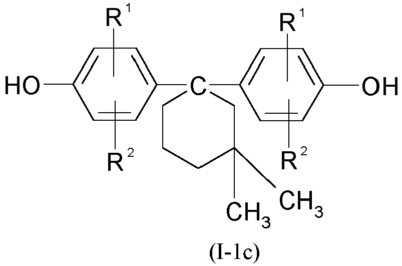 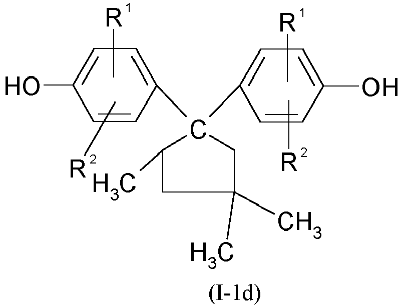 wobei das 1,1-Bis-(4-hydroxyphenyl)-3,3,5-trimethylcyclohexan (Formel (I-1b) mit R¹ und R² gleich H) besonders bevorzugt ist. Die Polycarbonate können gemäß der EP 0359953 A1 aus Diphenolen der Formel (I-1a) hergestellt werden.

Es können sowohl ein Diphenol der Formel (I-1a) unter Bildung von Homopolycarbonaten als auch mehrere Diphenole der Formel (I-1a) unter Bildung von Copolycarbonaten verwendet werden.

Außerdem können die Diphenole der Formel (I-1a) auch im Gemisch mit anderen Diphenolen, beispielsweise mit denen der Formel (I-1e)

HO - Z - OH (I-1e),

zur Herstellung von hochmolekularen, thermoplastischen, Polycarbonaten oder Copolycarbonaten verwendet werden.

Geeignete andere Diphenole der Formel (I-1e) sind solche, in denen Z ein aromatischer Rest mit 6 bis 34 C-Atomen ist, der einen oder mehrere aromatische Kerne enthalten kann, substituiert sein kann und aliphatische Reste oder andere cycloaliphatische Reste als die der Formel (I-1a) oder Heteroatome als Brückenglieder enthalten kann.

Beispiele der Diphenole der Formel (I-1e) sind:
Hydrochinon, Resorcin, Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, 1,1'-Bis-(hydroxyphenyl)-diisopropylbenzole, sowie deren kernalkylierte und kernhalogenierte Verbindungen.

Diese und weitere geeignete Diphenole sind z.B. in den US-A 3 028 365, 2 999 835, 3 148 172, 3 275 601, 2 991 273, 3 271 367, 3 062 781, 2 970 131 und 2 999 846, in den DE-A 1 570 703, 2 063 050, 2 063 052, 2 211 956, der Fr-A 1 561 518 und in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff., beschrieben.

Bevorzugte andere Diphenole der Formel (I-1e) sind beispielsweise:
Resorcin, 4,4'-Dihydroxydiphenyl, 2,2-Bis-(4-hydroxyphenyl)-propan, 2,4-Bis-(4-hydroxyphenyl)-2-methylbutan, 1,1 -Bis-(4-hydroxyphenyl)-cyclohexan-2,2-bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan-2,2-bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ie) sind beispielsweise:
2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Insbesondere sind 4,4'-Dihydroxydiphenyl und 2,2-Bis-(4-hydroxyphenyl)-propan als Diphenole der Formel (I-1e) bevorzugt. Die anderen Diphenole können sowohl einzeln als auch im Gemisch eingesetzt werden.

Durch die beliebige Komposition mit anderen Diphenolen, insbesondere mit denen der Formel (I-1e) lassen sich zudem die Polycarbonateigenschaften, insbesondere die Vicat-Erweichungstemperatur B/120 in günstiger Weise variieren.

Der Gesamtanteil der Carbonateinheiten der Formeln (I-1), (I-2), (I-3) und (I-4) im Copolycarbonat beträgt vorzugsweise 0,1 - 88 mol-%, besonders bevorzugt 1 - 86 mol-%, ganz besonders bevorzugt 5 - 84 mol-% und insbesondere 10 - 82 mol-% (bezogen auf die Summe der Mole eingesetzter Diphenole).

Bevorzugt leiten sich die Copolycarbonateinheiten der Formel (1-1) von Diphenolen der oben beschriebenen Formeln (1-1a) und (I-1e), vorzugsweise der Formeln (I-1b), (I-1c) und/oder (I-1d) und 2,2-Bis-(4-hydroxyphenyl)propan und/oder 4,4'-Dihydroxydiphenyl, besonders bevorzugt der Formel (I-1b) und 2,2-Bis-(4-hydroxyphenyl)propan, ab.

In einer anderen Ausführungsform leiten sich die Copolycarbonateinheiten von Diphenolen der Formeln (I-1e) und (I-2a), (I-3a) und/oder (I-4a) ab.

Ein bevorzugtes Copolycarbonat ist aufgebaut aus 17 bis 62 Gew.-% 2,2-Bis-(4-hydroxyphenyl)propan und 83 bis 38 Gew.-% Comonomer der allgemeinen Formel (I-2a), (I-3a) und/oder (I-4a), wobei sich die Mengen von Bisphenol A und Comonomer der allgemeinen Formeln (I-2a), (I-3a) und/oder (I-4a) zu 100 Gew.-% ergänzen.

Das molare Verhältnis von Diphenolen der Formel (I-1a) zu den gegebenenfalls mitzuverwendenden anderen Diphenolen der Formel (I-1e), soll zwischen 100 Mol-% (1-1a) zu 0 Mol-% (I-1e) und 2 Mol-% (I-1a) zu 98 Mol-% (I-1e), vorzugsweise zwischen 100 Mol-% (I-1a) zu 0 Mol-% (I-1e) und 10 Mol-% (I-1a) zu 90 Mol-% (I-1e) und insbesondere zwischen 100 Mol-% (I-1a) zu 0 Mol-% (I-1e) und 30 Mol-% (I-1a) zu 70 Mol-% (I-1e) liegen.

In einer besonders bevorzugten Ausführungsform beträgt der Anteil an Diphenolen der Formel (I-1a), bevorzugt von Formel (I-1b) im Copolycarbonat 10 bis 95 Gew.-%, besonders bevorzugt 44 - 85 Gew.-%. Dabei wird als bevorzugtes Diphenol der Formel (I-1e) 2,2-Bis-(4-hydroxyphenyl)propan und/oder 4,4'-Dihydroxydiphenyl, eingesetzt, dessen Anteil bevorzugt 15 bis 56 Gew.-% beträgt. Ganz besonders bevorzugt ist das Copolycarbonat aus Diphenolen der Formel (I-1b) und 2,2-Bis-(4-hydroxyphenyl)propan aufgebaut.

Die hochmolekularen Polycarbonate oder Copolycarbonate aus den Diphenolen der Formel (I-1a), gegebenenfalls in Kombination mit anderen Diphenolen, können nach den bekannten Polycarbonat-Herstellungsverfahren, wie vorstehend erwähnt, hergestellt werden. Dabei können die verschiedenen Diphenole sowohl statistisch als auch blockweise miteinander verknüpft sein.

Die Polycarbonate oder Copolycarbonate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:
Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-is-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 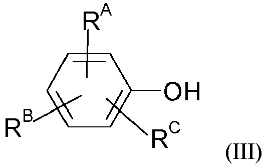 wobei
R^{A} für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
R^{B}, R^{C} unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Durch den Einbau der Diphenole der Formel (I-1a) sind Polycarbonate oder Copolycarbonate mit hoher Wärmeformbeständigkeit entstanden, die auch sonst ein gutes Eigenschaftsbild haben. Dies gilt insbesondere für die Polycarbonate oder Copolycarboante auf Basis der Diphenole der Formel (I-1a), in denen m 4 oder 5 ist und ganz besonders für die Polycarbonate oder Copolycarbonate auf Basis der Diphenole (I-1b), worin R¹ und R² unabhängig voneinander die für die Formel (I-1a) genannte Bedeutung haben und besonders bevorzugt Wasserstoff sind.

Diese Polycarbonate oder Copolycarbonate auf Basis der Diphenole der Formel (I-1b), worin insbesondere R¹ und R² Wasserstoff sind, besitzen hohen Wärmeformbeständigkeit gute UV-Stabilität und ein gutes Fließverhalten in der Schmelze.

Die erfindungsgemäße Schicht a) weist eine Lichttransmission von ≥ 0,1 % und ≤ 85 %, vorzugsweise von ≥ 1 % und ≤ 65 %, besonders bevorzugt von ≥ 2 % und ≤ 50 %"bestimmt gemäß ISO 13468-2:2006-07 auf.

In einer Ausführungsform umfasst die Schicht a) wenigstens einen Füllstoff. Bei dem Füllstoff handelt es sich bevorzugt um wenigstens ein Farbpigment und/oder wenigstens einen sonstigen Füllstoff zur Erzeugung einer Transluzenz der gefüllten Schicht, besonders bevorzugt um ein Weißpigment, ganz besonders bevorzugt um Titandioxid, Zirkoniumdioxid und/oder Bariumsulfat, in einer besonders bevorzugten Ausführungsform um Titandioxid.

Die genannten Füllstoffe werden vorzugsweise in Mengen von 2 bis 50 Gew.-%, besonders bevorzugt von 5 bis 40 Gew.-%, bezogen auf das Gesamtgewicht der Schicht, die den Füllstoff enthält, welche zum Beispiel durch Extrusion oder Coextrusion erfolgen kann, zugegeben.

Die Schicht a) kann eine Schichtdicke im Bereich von vorzugsweise von ≥ 20 bis ≤ 150 µm, besonders bevorzugt von ≥ 25 bis ≤ 150 µm, aufweisen.

Die wenigstens eine weitere transparente Schicht b) enthält wenigstens einen thermoplastischen Kunststoff, weist eine Lichttransmission von ≥ 85 % und ≤ 98 %, vorzugsweise von ≥ 87 % und ≤ 95 %, besonders bevorzugt von ≥88 % und ≤ 92%, bestimmt gemäß ISO 13468-2:2006-07 auf und die Vicat-Erweichungstemperatur B/120 des thermoplastichen Kunststoffs der Schicht b) ist niedriger als die des in oder mehrere Polycarbonat(e) oder Copolycarbonat(e) auf Basis von Diphenolen der Schicht a). Vorzugsweise weist der wenigstens eine thermoplastische Kunststoff der Schicht b) eine Vicat-Erweichungstemperatur von B/120, bestimmt gemäß ISO 306 (50N; 120°/h) in einem Bereich von ≥ 135 °C bis ≤ 155°C , vorzugsweise ≥ 140 °C bis ≤ 151°C, auf.

Bei dem wenigstens einen thermoplastischen Kunststoff der Schicht b) kann es sich um wenigstens einen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, oder deren Mischungen handeln.

Besonders geeignete thermoplastische Kunststoffe sind Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS^{™}), Poly- oder Copolykondensate einer aromatischen Dicarbonsäure und aliphatischen, cycloalophatischen und/oder araliphatischen Diolen mit 2 bis 16 Kohlenstoffatomen, wie beispielhaft und vorzugsweise Poly- oder Copolykondensate der Terephthalsäure, besonders bevorzugt Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), vorzugsweise Poly- oder Copolykondensate der Naphthalindicarbonsäure, besonders bevorzugt Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU), Polyvinylhalogenide, wie beispielhaft und vorzusgweise Polyvinylchlorid (PVC), oder Mischungen aus den vorangehend genannten.

Besonders bevorzugte thermoplastische Kunststoffe sind ein oder mehrere Polycarbonat(e) oder Copolycarbonat(e) auf Basis von Diphenolen oder Blends enthaltend wenigstens ein Polycarbonat oder Copolycarbonat. Ganz besonders bevorzugt sind Blends enthaltend wenigstens ein Polycarbonat oder Copolycarbonat und wenigstens ein Poly- oder Copolykondensat der Terephthalsäure, der Naphthalindicarbonsäure oder einer Cycloalkyldicarbonsäure, bevorzugt der Cyclohexandicarbonsäure Ganz besonders bevorzugt sind Polycarbonate oder Copolycarbonate, insbesondere mit mittleren Molekulargewichten Mw (bestimmt mittels Size Exclusion Chromatographie (SEC) nach ISO 16014-1:2012 nach vorheriger Eichung mit Polycarbonat-Eichsubstanzen) von 500 g/mol bis 100 000 g/mol, bevorzugt von 10 000 g/mol bis 80 000 g/mol, besonders bevorzugt von 15 000 g/mol bis 40 000 g/mol oder deren Blends mit wenigstens einem Poly- oder Copolykondensat der Terephthalsäure mit mittleren Molekulargewichten Mw (bestimmt mittels Size Exclusion Chromatographie (SEC) nach ISO 16014-1:2012 nach vorheriger Eichung mit Polycarbonat-Eichsubstanzen) von 10.000 g/mol bis 200.000 g/mol, bevorzugt von 21.000 g/mol bis 120.000 g/mol.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste, bezogen auf die Dicarbonsäurekomponente, und mindestens 80 Mol-%, vorzugsweise mindestens 90 Mol-% Ethylenglykol- und/oder Butandiol-1,4- und/oder 1,4-Cyclohexandimethanol-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 80 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In besonders bevorzugten Ausführungsformen der Erfindung handelt es sich bei dem Blend von wenigstens einem Polycarbonat oder Copolycarbonat mit wenigstens einem Poly- oder Copolykondensat der Terephthalsäure um einen Blend aus wenigstens einem Polycarbonat oder Copolycarbonat mit Poly- oder Copolybutylenterephthalat oder glycol-modifiziertem Poly- oder Copolycyclohexandimethylenterephthalat. Bei einem solchen Blend aus Polycarbonat oder Copolycarbonat mit Poly- oder Copolybutylenterephthalat oder glycol-modifiziertem Poly- oder Copolycyclohexandimethylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat oder glycol-modifiziertem Poly- oder Copolycyclohexandimethylenterephthalat, vorzugsweise mit 1 bis 90 Gew.-% Polycarbonat und 99 bis 10 Gew.-% Polybutylenterephthalat oder glycol-modifiziertem Polycyclohexandimethylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat oder glycol-modifiziertes Poly- oder Copolycyclohexandimethylenterephthalat um einen solchen mit 20 bis 85 Gew.-% Polycarbonat oder Copolycarbonat und 80 bis 15 Gew.-% Poly- oder Copolybutylenterephthalat oder glycol-modifiziertem Poly- oder Copolycyclohexandimethylenterephthalat, vorzugsweise mit 20 bis 85 Gew.-% Polycarbonat und 80 bis 15 Gew.-% Polybutylenterephthalat oder glycol-modifiziertem Polycyclohexandimethylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat oder glycol-modifiziertem Poly- oder Copolycyclohexandimethylenterephthalat um einen solchen mit 35 bis 80 Gew.-% Polycarbonat oder Copolycarbonat und 65 bis 20 Gew.-% Poly- oder Copolybutylenterephthalat oder glycol-modifiziertem Poly- oder Copolycyclohexandimethylenterephthalat, vorzugsweise mit 35 bis 80 Gew.-% Polycarbonat und 65 bis 20 Gew.-% Polybutylenterephthalat oder glycol-modifiziertem Polycyclohexandimethylenterephthalat handeln, wobei sich die Anteile zu 100 Gew.-% addieren. In ganz besonders bevorzugten Ausführungsformen kann es sich um Blends aus Polycarbonat und glycol-modifiziertem Polycyclohexandimethylenterephthalat in den vorangehend genannten Zusammensetzungen handeln.

Als Polycarbonate oder Copolycarbonate eignen sich in bevorzugten Ausführungsformen besonders aromatische Polycarbonate oder aromatische Copolycarbonate.

Die Polycarbonate oder Copolycarbonate können in bekannter Weise linear oder verzweigt sein.

Hinsichtlich der näheren Beschreibung sowie Ausführungen, Herstellung und Vorzugsbereiche der Polycarbonate oder Copolycarboante wird auf das Vorstehende zu Schicht a) verwiesen. Vorzugsweise werden für die Polycarbonate der Schicht b) Diphenole der allgemeinen Formel (Ie) eingesetzt, ganz besonders bevorzugt 4,4'-Dihydroxydiphenyl und 2,2-Bis-(4-hydroxyphenyl)-propan.

In einer Ausführungsform weist die Schicht b) eine Schichtdicke von ≥ 30 bis ≤ 800 µm, vorzugsweise ≥ 35 bis ≤ 700 µm, besonders bevorzugt ≥ 50 bis ≤ 600 µm auf.

Bevorzugt weisen mindestens die Schichten a) und b) eine Flächenausdehnung in einem Bereich von 1 bis 1000 cm², bevorzugt in einem Bereich von 2 bis 8000 cm², besonders bevorzugt in einem Bereich von 10 bis 5000 cm² auf. Bevorzugt weisen die beiden Schichten a) und b) in dem Schichtaufbau die gleichen Flächendimensionen auf. Bevorzugt überlappen die beiden Schichten a) und b) vollständig.

In einer weiteren Ausführungsform der Erfindung kann der Schichtverbund eine oder mehrere weitere Schicht(en) c) enthaltend wenigstens einen thermoplastischen Kunststoff umfassen. In einer Ausführungsform können diese eine oder mehrere Schicht(en) c) eine Lichttransmission von ≥ 85 % bis ≤ 98 %, vorzugsweise von≥ 87 % und ≤ 95 %, besonders bevorzugt von ≥ 88 % und ≤ 92 % bestimmt gemäß ISO 13468-2:2006-07 aufweisen.

Bevorzugt weisen die mindestens eine Schicht(en) c) die gleiche Flächenausdehnung auf wie die Schichten a) und b). Weiterhin bevorzugt überlappen die Schichten a), b) und c) vollständig.

Bei dem wenigstens einen thermoplastische Kunststoff der einen oder mehreren Schichten c) kann es sich unabhängig voneinander um einen thermoplastischen Kunststoff, wie unter der Schicht b) beschrieben wurde, handeln. Daher wird zur Vermeidung von Wiederholungen zu den Ausführungen sowie den Vorzugsbereichen der Schicht b) verwiesen.

In einer bevorzugten Ausführungsform des Schichtaufbaus umfasst der Schichtaufbau mindestens eine weitere Schicht c), enthaltend ein oder mehrere Polycarbonat(e) oder Copolycarbonat(e) auf Basis von Diphenolen, vorzugsweise Copolycarbonate(e) auf Basis von Diphenolen. Bevorzugt sind die Schichten a) und c) in dieser bevorzugten Ausführungsform des Schichtaufbaus ihrem Aufbau nach identisch, können jedoch je nach Anwendung in ihrer Dicke voneinander variieren. Besonders bevorzugt ist eine der mindestens einen weiteren Schichten c) auf der anderen Seite bezüglich der Schicht a) im Schichtaufbau angeordnet als die Schicht b). Besonders bevorzugt weist der Schichtaufbau in dieser bevorzugten Ausführungsform des Schichtaufbaus eine Anordnung der Schichten auf, bei dem die Schicht b) zwischen den Schichten a) und c) angeordnet ist. Hierbei können sich zwischen den Schichten a) und b) sowie zwischen den Schichten a) und c) noch weitere Schichten c) befinden, wobei diese weiteren Schichten c) ebenfalls einen thermoplastischen Kunststoff enthalten können.

Diese eine oder mehreren Schicht(en) c) können unabhängig voneinander gleich oder verschieden hinsichtlich Material und Dicke von Schicht b) sein. Die eine oder mehreren Schicht(en) c) können im Schichtverbund so angeordnet sein, dass wenigstens die Schichtfolgen c), a), b), oder a), b), c) oder c), a), b), c) resultieren. Es können aber auch weitere Schichten c) zusätzlich zu den vorstehenden Schichtfolgen angeordnet werden, die unabhängig voneinander gleich oder verschieden hinsichtlich Material und Schichtdicke sein können.

Vorzugsweise weist die eine oder mehreren Schichten c) eine Dicke von ≥ 10 bis ≤ 300 µm, vorzugsweise von ≥ 20 bis ≤ 200 µm, besonders bevorzugt von ≥ 25 bis ≤ 150 µm, auf.

In einer anderen Ausführungsform des erfindungsgemäßen Schichtaufbaus enthält die wenigstens eine Schicht a), die wenigstens eine Schicht b) und/oder die ein oder mehreren Schicht(en) c) wenigstens ein lasersensibles Additiv, vorzugsweise Schwarzpigment, besonders bevorzugt Ruß. Diese Ausführungsform der Erfindung lässt sich gut mittels Lasergravur personalisieren. Die Beschriftung von Kunststoff-Folien mittels Lasergravur wird in der Fachwelt und auch im Folgenden kurz als Laserbeschriftung bezeichnet. Demnach ist im Folgenden unter dem Begriff "laserbeschriftet" mittels Lasergravur beschriftet zu verstehen. Das Verfahren der Lasergravur ist dem Fachmann bekannt und nicht zu verwechseln mit dem Bedrucken mittels Laserdruckern.

Das lasersensitives Additiv kann in der erfindungsgemäßen Folie in einer Menge von ≥ 3 bis ≤ 200 ppm, vorzugsweise von ≥ 4 bis ≤ 180 ppm, besonders bevorzugt von ≥ 5 bis ≤ 160 ppm enthalten sein.

Bevorzugt ist es, wenn die Korngröße des lasersensiblen Additivs im Bereich von 100 nm bis 10 µm liegt, und besonders vorteilhaft, wenn sie im Bereich von 50 nm bis 2 µm liegt.

Erfindungsgemäß weist die Schicht a) wenigstens eine Öffnung auf. Die Öffnung der Schicht a) kann unterschiedliche Formen und Größen aufweisen, vorzugsweise weist die Öffnung der Schicht a) eine kreisrunde oder ellipsenförmige Form auf. Vorzugsweise kann die Öffnung der Schicht a) durch Stanzen mit einem geeigneten Werkzeug in die Schicht a) nach dem Fachmann bekannten Methoden eingebracht werden.

Weiterhin erfindungsgemäß, weist die Schicht a) eine Schichtdicke von ≥ 10 bis ≤ 150 µm, vorzugsweise von ≥ 20 bis ≤ 100 µm, besonders bevorzugt von ≥ 25 bis ≤ 75 µm, auf.

In einer weiteren Ausführungsform der Erfindung wird die Öffnung der Schicht a) nicht zusätzlich mit einem thermoplastischen Material ausgefüllt.

In einer anderen Ausführungsform der Erfindung wird ein oder mehrere elektronische Bauteil(e), Volumenhologramm und/oder Prägehologramm zwischen der Schicht a) und der Schicht b) angeordnet. Bei diesem Bauteil kann es sich um einen Mikrochip oder eine Antenne handeln.

Der Schichtverbund kann weitere Schichten eines thermoplastischen Kunststoffs, wie vorstehend beschrieben, umfassen.

Vorzugsweise handelt es sich bei den Schichten a), b), c) und/oder gegebenenfalls weiteren Schichten um Folien, insbesondere um Mono- und/oder Mehrschichtfolien, die durch Extrusion oder Coextrusion hergestellt werden können und die vorstehenden thermoplastischen Kunststoffe umfassen. Vorzugsweise handelt es sich bei den Schichten a), b) und/oder c) um Monofolien, die durch Extrusion oder Coextrusion hergestellt werden können.

Die Schichtdicken der einzelnen Schichten a), b) und/oder c) können unabhängig voneinander entweder durch Extrusion oder Coextrusion der entsprechenden Mono- und/oder Mehrschichtfolien in der entsprechenden Schichtdicke erzielt werden. Die Schichtdicken der einzelnen Schichten a), b) und/oder c) können aber auch unabhängig voneinander durch übereinanderlegen von entsprechenden dünnen Folien dieser Schichten erzielt werden.

Ein oder mehrere Sicherheitsmerkmale können an beliebigen Stellen im erfindungsgemäßen Schichtverbund eingebracht werden. Sicherheitsmerkmale können als elektronischen Bauteile, wie beispielsweise Antennen und Mikrochips, Hologramme und/oder Sicherheitsdrucke in den Schichtverbund eingebracht werden. Idealerweise werden ein oder mehrere Sicherheitsmerkmale in der Weise im erfindungsgemäßen Schichtaufbau platziert, dass diese zumindest teilweise von der Schicht a) überdeckt werden. Denkbar wäre beispielsweise, dass ein oder mehrere Sicherheitsmerkmale zwischen die Schicht a) und b) platziert werden.

Erfindungsgemäß umfasst die Schicht a) eine oder mehrere Öffnungen. Bevorzugt wird durch die Öffnung in der Schicht a) ein Fenster der Schicht b) sichtbar. In dieser Ausführungsform können auch weitere Sicherheitsmerkmale an anderen Stellen im erfindungsgemäßen Schichtverbund enthalten sein. Idealerweise kann wenigstens ein Sicherheitsmerkmal so platziert werden, dass dieses durch das Fenster sichtbar wird. Insbesondere Volumen- und/oder Prägehologramme können in dieser Ausführungsform in der vorgenannten Weise angeordnet werden.

Ist eine weitere Schicht c) im Schichtaufbau vorhanden, so weist diese Schicht c) bevorzugt an der gleichen Stelle bezüglich der Flächenausdehnung der Schichten wie die Schicht a) ebenfalls eine Öffnung, bevorzugt in der gleichen Größe wie die Öffnung in der Schicht a) auf. Idealerweise ist die Öffnung in der Schicht c) so zu dem Fenster in Schicht b) und der Öffnung in Schicht a) platziert, dass das wenigstens eine Sicherheitsmerkmal, von beiden Seiten des Sicherheitselementes sichtbar wird. Insbesondere Volumen- und/oder Prägehologramme können in dieser Ausführungsform in der vorgenannten Weise angeordnet werden.

Es ist bevorzugt, dass sich zwischen der Schicht a) und b) oder der Schicht b) und c) eine Antenne befindet. Bevorzugt ist die Antenne so angeordnet, dass sie in der Öffnung in Schicht a) oder c) und damit auch in dem Fenster in Schicht b) nicht sichtbar wird.

Die einzelnen Schichten des Schichtaufbaus können mittels Lamination unter Verwendung einer Laminierpresse unter Einwirkung von Wärme und Druck für eine bestimmte Zeitspanne verpresst werden, so dass ein monolithischer Verbund der einzelnen Schichten entsteht, ein sogenanntes Laminat. Druck und Temperatur während des Laminiervorgangs sind so zu wählen, dass die einzelnen Schichten und die gegebenenfalls enthaltenen Sicherheitsmerkmale nicht beschädigt werden, aber die einzelnen Schichten einen festen Verbund bilden, der sich später nicht wieder in die einzelnen Schichten auflöst.

Weiterer Gegenstand der Erfindung ist ein Verfahren zur Herstellung eines Schichtverbundes umfassend
- Bereitstellung eines Schichtaufbaus umfassend wenigstens
   a) Eine opake Schicht a) enthaltend ein oder mehrere Polycarbonat(e) oder Copolycarbonat(e) auf Basis von Diphenolen wobei die Schicht a) eine Lichttransmission von ≥ 0,1 % und ≤ 85 %, vorzugsweise von ≥ 1 % und ≤ 65 %, besonders bevorzugt von ≥ 2 % und ≤ 50 % bestimmt gemäß ISO 13468-2:2006-07 aufweist, und
   b) eine weitere transparente Schicht b) enthaltend wenigstens einen thermoplastischen Kunststoff, wobei die wenigstens eine weitere Schicht b) eine Lichttransmission von ≥ 85 % und ≤ 98 %, vorzugsweise von ≥ 87 % und ≤ 95 %, besonders bevorzugt von ≥ 88 % und ≤ 92 %, bestimmt gemäß ISO 13468-2:2006-07 aufweist, dadurch gekennzeichnet, dass die Vicat-Erweichungstemperatur B/120, bestimmt gemäß ISO 306:2004 (Methode B120 50N; 120°C/h) des einen oder mehreren Polycarbonat(en) oder Copolycarbonat(en) der Schicht a) ≥ 156 °C, bevorzugt von ≥ 156 °C bis ≤ 250 °C, besonders bevorzugt von ≥ 156 °C bis ≤ 230 °C, ist, und dass die Vicat-Erweichungstemperatur B/120, bestimmt gemäß ISO 306:2004 (Methode B120 50N; 120°C/h) höher ist als die der Schicht b),
- Gegebenenfalls Platzierung eines oder mehrerer elektronischer Bauteile, eines oder mehrerer Volumenhologramme und/oder eines oder mehrerer Prägehologramme zwischen den Schichten a) und b),
- Stanzen wenigstens einer Öffnung in Schicht a),
- Gegebenenfalls Bereitstellung einer oder mehrerer weiterer Schichten c) umfassend wenigstens einen thermoplastischen Kunststoff,
- Laminierung des Schichtaufbaus bei einer Temperatur von 120 °C bis 210 °C vorzugsweise von 130 °C bis 205 °C, besonders bevorzugt von 165 °C bis 200 °C und einem Druck von 10 N/cm² bis 400 N/cm², vorzugsweise von 30 N/cm² bis 300 N/cm², besonders bevorzugt von 40 N/cm² bis 250 N/cm².

Zur Vermeidung von Wiederholungen wird hinsichtlich der Ausführungsformen und Vorzugsbereiche der einzelnen Schichten auf das Vorstehende verwiesen.

Bevorzugt wird ebenfalls in die Schicht c) bzw. die Schichten c), wenn vorhanden eine Öffnung gestanzt. Bevorzugt überlappen sich die Öffnungen in den Schichten a) und c), sodass ein Fenster in Schicht b) durch die Öffnungen von beiden Seiten des Schichtaufbaus sichtbar ist.

In einer anderen Ausführungsform des erfindungsgemäßen Verfahrens kann der Schichtaufbau vor und/oder nach der Lamination mittels Laserstrahlung beschrieben werden.

Weiterer Gegenstand der Erfindung ist ein Sicherheitsdokument, bevorzugt Identifikationsdokument, umfassend wenigstens einen erfindungsgemäßen Schichtaufbau wie vorstehend beschrieben.

Weiterer Gegenstand ist die Verwendung einer opaken Schicht a) enthaltend ein oder mehrere Polycarbonat(e) oder Copolycarbonat(e) auf Basis von Diphenolen mit einer Lichttransmission von ≥ 0,1 % und ≤ 85 %, vorzugsweise von ≥ 1 % und ≤ 65 %, besonders bevorzugt von ≥ 2 % und ≤ 50 % bestimmt gemäß ISO 13468-2:2006-07 dadurch gekennzeichnet, dass die Vicat-Erweichungstemperatur B/120, bestimmt gemäß ISO 306:2004 (Methode B120 50N; 120°C/h) des einen oder mehreren Polycarbonat(en) oder Copolycarbonat(en) der Schicht a) ≥ 156 °C, bevorzugt von ≥ 156 °C bis ≤ 250 °C, besonders bevorzugt von ≥ 156 °C bis ≤ 230 °C, ist, zur Herstellung von Fenstern in Sicherheitsdokumenten, vorzugsweise Identifikationsdokumenten.

### Beispiele

### Eingesetzte Rohstoffe

Markolon^{™} 3108: hochviskoses amorphes, thermoplastisches Bisphenol A-Polycarbonat der Firma Covestro AG mit einem MVR 6,5 g/10min nach ISO 1133-1:2011 bei 300°C und 1,2 kg Auflagegewicht und einer Vicat Erweichungstemperatur (VST) nach ISO 306:2004 Methode B120 bei 50 N; 120 °C/h von 150°C und einer Glasübergangstemperatur T_{g} nach ISO 11357-1,-2 von 149°C

KRONOS^{™} 2230: Titandioxid der Fa. Kronos für Polycarbonat und andere technische Thermoplaste mit einem TiO₂ Gehalt ≥ 96 %

### Polycarbonat PC 1:

149,0 g (0,65 Mol) Bisphenol A (2,2-Bis-(4-hydroxyphenyl)-propan, 107,9 g (0,35 Mol) 1,1-Bis-(4-hydroxyphenyl)-3,3,5-trimethylcyclohexan, 336,6 g (6 Mol KOH und 2700 g Wasser wurden in einer Inertgas-Atmosphäre unter Rühren gelöst. Dann fügte man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wurde 1 ml Ethylpiperidin zugegeben und noch 45 Min. gerührt. Die bisphenolatfreie wässrige Phase wurde abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,255, bestimmt nach DIN EN ISO 1628-1:2009. Die Vicat-Erweichungstemperatur des Polymers wurde nach ISO 306:2004 Methode B120 bei 50 N; 120 °C/h zu 183°C ermittelt.

### Polycarbonat PC 2:

Analog zu PC 1 wurde eine Mischung aus 91,6 g (0,40 Mol) Bisphenol A und 185,9 g (0,60 Mol) 1,1-Bis-(4-hydroxyphenyl)-3,3,5-trimethylcyclohexan zum entsprechenden Polycarbonat 2 umgesetzt. Das Polycarbonat zeigte eine relative Lösungsviskosität von 1,251, bestimmt nach DIN EN ISO 1628-1:2009.

Die Vicat-Erweichungstemperatur des Polymers wurde nach ISO 306:2004 Methode B120 bei 50 N; 120 °C/h zu 204°C bestimmt.

### Polycarbonat PC 3:

Analog zu PC 1 wurde eine Mischung aus 44,2 g (0,19 Mol) Bisphenol A und 250,4 g (0,81 Mol) 1,1-Bis-(4-hydroxyphenyl)-3,3,5-trimethylcyclohexan zum entsprechenden Polycarbonat umgesetzt.

Das Polycarbonat zeigte eine relative Lösungsviskosität von 1,248, bestimmt nach DIN EN ISO 1628-1:2009.

Die Vicat-Erweichungstemperatur des Polymers wurde nach ISO 306:2004 Methode B120 bei 50 N; 120 °C/h zu 216°C bestimmt.

### Compoundierung eines Batches für die Herstellung einer Schicht umfassend einen thermoplstischen Kunststoff und ein Weißpigment als Füllstoff:

Die Herstellung der Batche für die Herstellung einer weißen Schicht erfolgte mit einem herkömmlichen Zweischnecken-Compoundierextruder (ZSK 32) bei für Polycarbonat üblichen Verarbeitungstemperaturen von 250 bis 330°C.

Es wurden Batche mit den Zusammensetzungen gemäß Tabelle 1 compoundiert und anschließend granuliert:

**Tabelle 1: Zusammensetzung von Compounds für die Herstellung von Schichten umfassend thermoplastische Kunststoffe**

| | Polycarbonat | Kronos^{™} 2230 |
|---|---|---|
| Compound 1 | 85 Gew.-% PC 1 | 10 Gew-% |
| Compound 2 | 85 Gew.-% PC 2 | 10 Gew-% |
| Compound 3 | 85 Gew.-% PC 3 | 10 Gew-% |
| Compound 4 | 85 Gew.-% Makrolon^{™} 3108 | 10 Gew-% |

### Allgemeine Herstellvorschrift von Extrusions-Folien

Die verwendete Anlage besteht aus
▪ einem Extruder mit einer Schnecke von 105 mm Durchmesser (D) und einer Länge von 41xD. Die Schnecke weist eine Entgasungszone auf;
▪ einem Umlenkkopf;
▪ einer -Breitschlitzdüse mit 1500 mm Breite;
▪ einem Dreiwalzen-Glättkalander mit horizontaler Walzenanordnung, wobei die dritte Walze um +/- 45° gegenüber der Horizontalen schwenkbar ist;
▪ einer Rollenbahn;
▪ einer Einrichtung zum beidseitigen Aufbringen von Schutzfolie;
▪ einer Abzugseinrichtung;
▪ Aufwickelstation.

Das Granulat wurde dem Fülltrichter des Extruders zugeführt. Im jeweiligen Plastifiziersystem Zylinder/Schnecke erfolgte das Aufschmelzen und Fördern des jeweiligen Materials. Die Materialschmelze wurde der Düse zugeführt. Von der Düse gelangte die Schmelze auf den Glättkalander. Auf dem Glättkalander erfolgt die endgültige Formgebung und Abkühlung des Materials. Zur Strukturierung der Folienoberflächen wurden dabei eine mattierte Stahl-Walze (4-er Oberfläche) und eine mattierte Gummi-Walze (4-er Oberfläche) eingesetzt. Anschließend wurde die Folie durch einen Abzug transportiert, danach erfolgte die Aufwicklung der Folie. Auf diese Weise wurden gemäß Tabelle 2 die entsprechenden weiß opaken Extrusionsfolien hergestellt.

**Tabelle 2: Weiß opake Extrusionsfolien**

| | Compound | Folien-Schichtdicke |
|---|---|---|
| Folie 1a | 100% Compound 1 | 30 µm |
| Folie 1b | 100% Compound 1 | 100 µm |
| Folie 2 | 100% Compound 2 | 30 µm |
| Folie 3 | 100% Compound 3 | 30 µm |
| Folie 4a* | 100% Compound 4 | 30 µm |
| Folie 4b* | 100% Compound 4 | 100 µm |
| Folie 4c* | 100% Compound 4 | 150 µm |

| | | |
|---|---|---|
| * nicht erfindungsgemäß | | |

### Herstellung von Identifikationsdokumenten (ID-Karte) mit transparentem Fenster:

### Folie 5 (transparente Overlayfolie des Kartenaufbaus):

Es wurde wie vorstehend beschrieben eine transparente Polycarbonatfolie der Dicke 100 µm aus 100% Polycarbonat Makrolon^{™} 3108 bei einer Massetemperatur von ca. 280°C mittels Extrusion hergestellt. Zur Strukturierung der Folienoberflächen wurden dabei eine mattierte Stahl-Walze (6-er Oberfläche) und eine mattierte Gummi-Walze (2-er Oberfläche) eingesetzt.

### Folie 6 (Kern des Kartenaufbaus):

Es wurde eine Folie wie Folie 5 hergestellt, jedoch mit einer Dicke von 540 µm hergestellt.

### Bereitstellung des Fensters:

In die weiß opaken Folien 1 bis 4a wurde ein jeweils Loch mit 10 mm Durchmesser und daneben ein zweites Loch mit 20 mm Durchmesser gestanzt.

### Bereitstellung des Schichtaufbaus von ID Karten

Es wurden Schichtaufbauten gemäß Tabelle 3 hergestellt. Es wurde ein symmetrischer Schichtaufbau der Karte gewählt, um ein Verbiegen der Karte zu vermeiden. Dazu wurde aus den Folien jeweils ein Stapel in der Reihenfolge gemäß Tabelle 3 gebildet und die Lamination wurde auf einer Laminationspresse der Firma Bürkle mit folgenden Parametern durchgeführt.

### Bedingungen

- Vorheizen der Presse auf 170-180°C
- Pressen für 8 Minuten bei einem Druck von 15 N/cm²
- Pressen für 2 Minuten bei einem Druck von 200 N/cm²
- Abkühlen der Presse auf 38°C und öffnen der Presse.

**Tabelle 3: Schichtaufbau der ID-Karten mit einem Fenster**

| | Schicht (1) | Schicht (2) | Schicht (3) | Schicht (2) | Schicht (1) |
|---|---|---|---|---|---|
| Beispiel 1 | Folie 5 (100 µm) | Folie 1a (30 µm) | Folie 6 (540 µm) | Folie 1a (30 µm) | Folie 5 (100 µm) |
| Beispiel 2 | Folie 5 (100 µm) | Folie 2 (30 µm) | Folie 6 (540 µm) | Folie 2 (30 µm) | Folie 5 (100 µm) |
| Beispiel 3 | Folie 5 (100 µm) | Folie 3 (30 µm) | Folie 6 (540 µm) | Folie 3 (30 µm) | Folie 5 (100 µm) |
| Beispiel 4* | Folie 5 (100 µm) | Folie 4a (30 µm) | Folie 6 (540 µm) | Folie 4a (30 µm) | Folie 5 (100 µm) |

| | | | | | |
|---|---|---|---|---|---|
| * nicht erfindungsgemäß | | | | | |

### Fensterdurchmesser der ID Karten vor und nach der Lamination

Die Durchmesser der Öffnungen in den Folien 1 bis 4a wurden vor und nach der Lamination bestimmt. Vor der Lamination wurde die Öffnung in den Folien 1 bis 4a ausgemessen und nach der Lamination erfolgte die Ausmessung der Öffnung im Laminat.

**Tabelle 4: Durchmesser der transparenten Fenster vor und nach Lamination**

| | Öffnung ø 10 mm Vor Lamination | Öffnung ø 10 mm nach Lamination | Öffnung ø 20 mm vor Lamination | Öffnung ø 20 mm nach Lamination |
|---|---|---|---|---|
| Beispiel 1 | 10,1 mm | 9,90 mm | 20,2 mm | 19,65 mm |
| Beispiel 2 | 10,07 mm | 9,88 mm | 20,2 mm | 19,7 mm |
| Beispiel 3 | 10,1 mm | 9,80 mm | 20,2 mm | 19,7 mm |
| Beispiel 4 * | 10,1 mm | 9,70 mm | 20,2 mm | 19,40 mm |

| | | | | |
|---|---|---|---|---|
| * nicht erfindungsgemäß | | | | |

Alle erfindungsgemäßen Karten mit den erfindungsgemäßen weißen Folien 1-3 (Beispiele 1 bis 3) zeigten eine geringere Änderung des Durchmessers und damit bessere Konturstabilität des ausgestanzten Musters im Vergleich zu Beispiel 4. Das ist besonders vorteilhaft, wenn komplexere Geometrien für transparente Fenster zum Einsatz kommen.

### Herstellung von Identifikationsdokumenten (ID-Karte) mit gelegter Antenne:

### Folie 7:

Es wurde wie vorstehend beschrieben eine transparente Polycarbonatfolie der Dicke 100 µm aus 99,9994 % Polycarbonat Makrolon^{™} 3108 und 0,0006 % (6 ppm) Vulcan XC 72 der Fa. Cabot) bei einer Massetemperatur von ca. 280°C mittels Extrusion hergestellt. Zur Strukturierung der Folienoberflächen wurden dabei eine mattierte Stahl-Walze (6-er Oberfläche) und eine mattierte Gummi-Walze (2-er Oberfläche) eingesetzt.

Es wurden Schichtaufbauten gemäß Tabelle 5 hergestellt. Dazu wurde aus den Folien wie jeweils ein Stapel in der Reihenfolge gemäß Tabelle 5 gebildet und die Lamination wurde auf einer Laminationspresse der Firma Bürkle mit folgenden Parametern durchgeführt.

Für die 250 µm dicke Schicht 4 wurde eine Folie 4b und eine Folie 4c übereinander gelegt. Auf die Folie 4b wurde eine Drahtantenne so gelegt, dass diese Drahtantenne in Kontakt mit der Schicht 3 stand.

### Laminationsbedingungen

- Vorheizen der Presse auf 170-180°C
- Pressen für 8 Minuten bei einem Druck von 15 N/cm²
- Pressen für 2 Minuten bei einem Druck von 200 N/cm²
- Abkühlen der Presse auf 38°C und öffnen der Presse.

**Tabelle 5: ID Dokumente mit eingelegter Antenne zwischen Schicht 3 und 4**

| | Schicht (1) | Schicht (2) | Schicht (3) | Schicht (4) | Schicht (5) | Schicht (6) |
|---|---|---|---|---|---|---|
| Beispiel 5 | Folie 5 100 µm | Folie 7 100 µm | Folie 1b 100 µm | Folie 4b+4c 250 µm | Folie 7 100 µm | Folie 5 100 µm |
| Beispiel 6* | Folie 5 100 µm | Folie 7 100 µm | Folie 4b 100 µm | Folie 4b+4c 250 µm | Folie 7 100 µm | Folie 5 100 µm |

| | | | | | | |
|---|---|---|---|---|---|---|
| * nicht erfindungsgemäß | | | | | | |

Die Karte, in der die erfindungsgemäße Folie 1b an die Schicht mit der Folie 4b, auf die die Drahtantenne gelegt wurde, angrenzte, wies nach visueller Begutachtung eine gerade Fläche zwischen der erfindungsgemäßen Folie 1b und den Drähten auf (Beispiel 5). In Beispiel 6* (nicht erfindungsgemäß) in dem die Folie 4b (Schicht 3) an die Schicht der Folie 4b grenzt, drücken sich die Antennendrähte durch, also es entstand ein Verzug der darüber liegenden Lagen und somit eine Sichtbarkeit der Drahtantennen in der Karte.

## Patentansprüche

1. Schichtaufbau umfassend wenigstens
a) eine opake Schicht a) enthaltend ein oder mehrere Polycarbonat(e) oder Copolycarbonat(e) auf Basis von Diphenolen, vorzugsweise Copolycarbonate(e) auf Basis von Diphenolen, wobei die Schicht a) eine Lichttransmission von ≥ 0,1 % und ≤ 85 %, vorzugsweise von ≥ 1 % und ≤ 65 %, besonders bevorzugt von ≥ 2 % und ≤ 50 % bestimmt gemäß ISO 13468-2:2006-07 aufweist, und
b) eine weitere transparente Schicht b) enthaltend wenigstens einen thermoplastischen Kunststoff, wobei die wenigstens eine weitere Schicht b) eine Lichttransmission von ≥ 85 % und ≤ 98 %, vorzugsweise von ≥ 87 % und ≤ 95 %, besonders bevorzugt von ≥ 88 % und ≤ 92 %, bestimmt gemäß ISO 13468-2:2006-07 aufweist,
**dadurch gekennzeichnet, dass** die Vicat-Erweichungstemperatur B/120, bestimmt gemäß ISO 306:2004 (Methode B120 50N; 120°C/h) des einen oder mehreren Polycarbonat(en) oder Copolycarbonat(en) der Schicht a) ≥ 156 °C, bevorzugt von ≥ 156 °C bis ≤ 250 °C, besonders bevorzugt von ≥ 156 °C bis ≤ 230 °C, ist, und dass die Vicat-Erweichungstemperatur B/120, bestimmt gemäß ISO 306:2004 (Methode B120 50N; 120°C/h) höher ist als die des thermoplastischen Kunststoffs der Schicht b),
wobei die wenigstens eine Schicht a) wenigstens eine Öffnung umfasst und eine Schichtdicke von ≥ 10 bis ≤ 150 µm aufweist.

2. Schichtaufbau gemäß Anspruch 1, wobei die wenigstens eine Schicht b) einen thermoplastischen Kunststoff umfasst, der eine Vicat-Erweichungstemperatur von B/120, bestimmt gemäß ISO 306 (50N; 50°/h) in einem Bereich von ≥ 135 °C bis ≤ 155°C, vorzugsweise ≥ 140 °C bis ≤ 151 °C, aufweist.

3. Schichtaufbau gemäß Anspruch 1 oder 2, wobei in Schicht a) das eine oder mehrere Polycarbonat(e) oder Copolycarbonat(e) auf Basis von Diphenolen mindestens eine Carbonatstruktureinheit der Formel (I-1), (I-2), (I-3) und/oder (I-4) 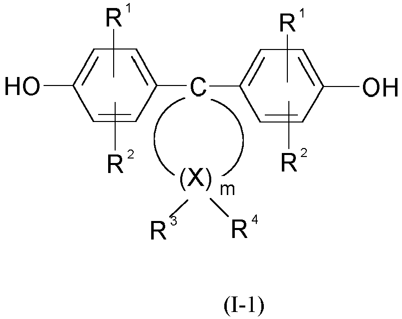 worin
R¹ und R² unabhängig voneinander Wasserstoff, Halogen, bevorzugt Chlor oder Brom, Ci-Cs-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten,
mit der Maßgabe, dass an mindestens einem Atom X, R³ und R⁴ gleichzeitig Alkyl bedeuten, 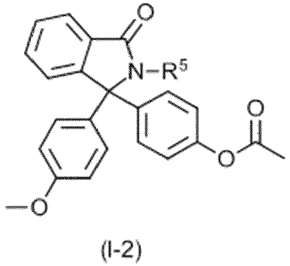 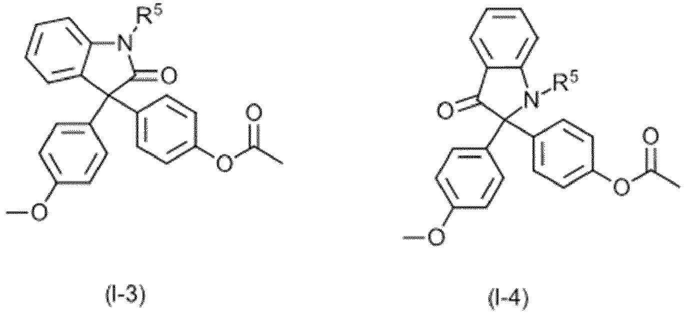
worin R⁵ für einen C₁- bis C₄-Alkylrest, Aralkylrest oder Arylrest, bevorzugt für einen Methylrest oder Phenylrest, ganz besonders bevorzugt für einen Methylrest, steht.

4. Schichtaufbau gemäß Anspruch 3, wobei in Schicht a) das eine oder mehrere Polycarbonat(e) oder Copolycarbonat(e) auf Basis von Diphenolen mindestens eine Carbonatstruktureinheit der Formel (I-1) umfasst.

5. Schichtaufbau gemäß Anspruch 1 bis 4, wobei die wenigstens eine Öffnung der Schicht a) nicht zusätzlich mit einem thermoplastischen Material ausgefüllt wird.

6. Schichtaufbau gemäß Anspruch 1 bis 5 wobei die wenigstens eine Schicht a) einen Füllstoff, vorzugsweise Weißpigment, besonders bevorzugt Titandioxid, Zirkoniumdioxid und/oder Bariumsulfat, ganz besonders bevorzugt Titandioxid, umfasst.

7. Schichtaufbau gemäß Anspruch 1 bis 6, wobei die wenigstens eine Schicht a) eine Dicke von ≥ 20 bis ≤ 100 µm, besonders bevorzugt von ≥ 25 bis ≤ 75 µm, aufweist.

8. Schichtaufbau gemäß Anspruch 1 bis 7, wobei die wenigstens eine Schicht b) wenigstens einen thermoplastischen Kunststoff ausgewählt aus Polymerisaten von ethylenisch ungesättigten Monomeren und/oder Polykondensaten von bifunktionellen reaktiven Verbindungen, bevorzugt um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, Polyurethan(e), sowie Polyolefin(e), Poly- oder Copolykondensat(e) der Terephthalsäure, Poly- oder Copolykondensate der Naphthalindicarbonsäure, Poly- oder Copolykondensat(e) wenigstens einer Cycloalkyldicarbonsäure, Polysulfone oder Mischungen aus diesen, besonders bevorzugt um ein oder mehrere Polycarbonat(e) oder Copolycarbonat(e) auf Basis von Diphenolen oder Blends enthaltend wenigstens ein Polycarbonat oder Copolycarbonat, umfassen.

9. Schichtaufbau gemäß Anspruch 1 bis 8, wobei eine oder mehrere weitere Schicht(en) c) umfassend wenigstens einen thermoplastischen Kunststoff, und diese wenigstens weitere Schicht c) eine Lichttransmission von ≥ 85 % bis ≤ 98 %, ≥ 87 % und ≤ 95 %, besonders bevorzugt von ≥ 88 % und ≤ 92 % bestimmt gemäß ISO 13468-2:2006-07 aufweist, enthalten ist.

10. Der Schichtaufbau gemäß Anspruch 1 bis 9, wobei der Schichtaufbau eine weitere Schicht c) umfasst, enthaltend ein oder mehrere Polycarbonat(e) oder Copolycarbonat(e) auf Basis von Diphenolen, vorzugsweise Copolycarbonate(e) auf Basis von Diphenolen.

11. Schichtaufbau gemäß Anspruch 1 bis 9, wobei die wenigstens eine Schicht a), wenigstens eine Schicht b) und/oder die ein oder mehreren Schichten c) wenigstens ein lasersensibles Additiv, vorzugsweise Schwarzpigment, besonders bevorzugt Ruß, umfasst.

12. Schichtaufbau gemäß Anspruch 1 bis 10, wobei wenigstens ein elektronisches Bauteil, Volumenhologramm und/oder Prägehologramm zwischen Schicht a) und Schicht b) angeordnet ist.

13. Verfahren zur Herstellung eines Schichtverbundes umfassend
- Bereitstellung eines Schichtaufbaus gemäß Anspruch 1 bis 10,
- Gegebenenfalls Platzierung eines oder mehrerer elektronischer Bauteile eines oder mehrerer Volumenhologramme und/oder eines oder mehrerer Prägehologramme zwischen den Schichten a) und b),
- Stanzen wenigstens einer Öffnung in Schicht a),
- Gegebenenfalls Bereitstellung einer oder mehrere weiterer Schichten c) umfassend wenigstens einen thermoplastischen Kunststoff,
- Laminierung des Schichtaufbaus bei einer Temperatur von 120 °C bis 210 °C vorzugsweise von 130 °C bis 205 °C, besonders bevorzugt von 165 °C bis 200 °C und einem Druck von 10 N/cm² bis 400 N/cm², vorzugsweise von 30 N/cm² bis 300 N/cm², besonders bevorzugt von 40 N/cm² bis 250 N/cm².

14. Ein Sicherheitsdokument, bevorzugt Identifikationsdokument, umfassend wenigstens einen Schichtaufbau gemäß einem der Ansprüche 1 bis 11.

15. Verwendung eines Schichtaufbaus wie in Anspruch 1 enthaltend eine opake Schicht a) enthaltend ein oder mehrere Polycarbonat(e) oder Copolycarbonat(e) auf Basis von Diphenolen mit einer Lichttransmission von ≥ 0,1 % und ≤ 85 %, vorzugsweise von ≥ 1 % und ≤ 65 %, besonders bevorzugt von ≥ 2 % und ≤ 50 % bestimmt gemäß ISO 13468-2:2006-07 **dadurch gekennzeichnet, dass** die Vicat-Erweichungstemperatur B/120, bestimmt gemäß ISO 306:2004 (Methode B120 50N; 120°C/h) des einen oder mehreren Polycarbonat(en) oder Copolycarbonat(en) der Schicht a) ≥ 156 °C, bevorzugt von ≥ 156 °C bis ≤ 250 °C, besonders bevorzugt von ≥ 156 °C bis ≤ 230 °C, ist, zur Herstellung von Fenstern in Sicherheitsdokumenten, vorzugsweise Identifikationsdokumenten.

## Claims

1. Layer construction comprising at least
a) one opaque layer a) containing one or more polycarbonate(s) or copolycarbonate(s) based on diphenols, preferably copolycarbonate(s) based on diphenols, wherein layer a) has a light transmittance of ≥ 0.1% and ≤ 85%, preferably of ≥ 1% and ≤ 65%, particularly preferably of ≥ 2% and ≤ 50%, determined according to ISO 13468-2:2006-07 and
b) one further transparent layer b) containing at least one thermoplastic, wherein the at least one further layer b) has a light transmittance of ≥ 85% and ≤ 98%, preferably of ≥ 87% and ≤ 95%, particularly preferably of ≥ 88% and ≤ 92%, determined according to ISO 13468-2:2006-07,
**characterized in that** the Vicat softening temperature B/120 determined according to ISO 306:2004 (method B120 50N; 120°C/h) of the one or more polycarbonate (s) or copolycarbonate(s) of layer a) is ≥ 156°C, preferably from ≥ 156°C to ≤ 250°C, particularly preferably from ≥ 156°C to ≤ 230°C, and **in that** the Vicat softening temperature B/120 determined according to ISO 306:2004 (method B120 50N; 120°C/h) is higher than that of the thermoplastic of layer b),
wherein the at least one layer a) has at least one opening and has a layer thickness of ≥ 10 to ≤ 150 µm.

2. Layer construction according to Claim 1, wherein the at least one layer b) comprises a thermoplastic having a Vicat softening temperature of B/120 determined according to ISO 306 (50N; 50°/h) in a range from ≥ 135°C to ≤ 155°C, preferably ≥ 140°C to ≤ 151°C.

3. Layer construction according to Claim 1 or 2, wherein in layer a) the one or more polycarbonate(s) or copolycarbonate(s) based on diphenols comprise at least one carbonate structural unit of formula (1-1), (I-2), (1-3) and/or (I-4) 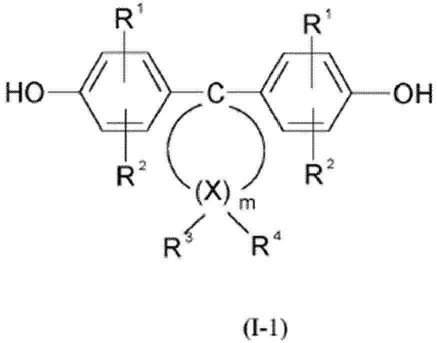 where
R¹ and R² are independently hydrogen, halogen, preferably chlorine or bromine, C₁-C₈-alkyl, C₅-C₆-cycloalkyl, C₆-C₁₀-aryl, preferably phenyl, and C₇-C₁₂-aralkyl, preferably phenyl-C₁-C₄-alkyl, especially benzyl,
m is an integer from 4 to 7, preferably 4 or 5,
R³ and R⁴ individually selectable for each X are independently of one another hydrogen or C₁-C₆-alkyl and X is carbon,
with the proviso that for at least one atom X, R³ and R⁴ are both alkyl, 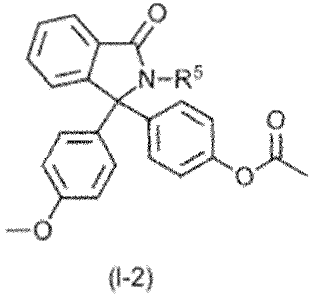 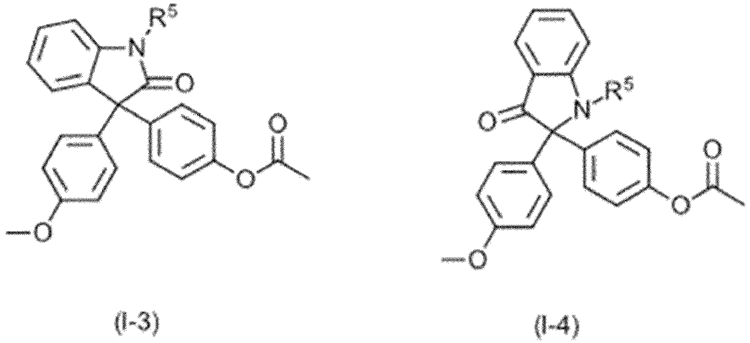
where R⁵ is a C₁- to C₄-alkyl radical, aralkyl radical or aryl radical, preferably a methyl radical or phenyl radical, very particularly preferably a methyl radical.

4. Layer construction according to Claim 3, wherein in layer a) the one or more polycarbonate(s) or copolycarbonate(s) based on diphenols comprise at least one carbonate structural unit of formula (I-1).

5. Layer construction according to Claims 1 to 4, wherein the at least one opening in layer a) is not additionally filled with a thermoplastic material.

6. Layer construction according to Claims 1 to 5, wherein the at least one layer a) comprises a filler, preferably white pigment, particularly preferably titanium dioxide, zirconium dioxide and/or barium sulfate, very particularly preferably titanium dioxide.

7. Layer construction according to Claims 1 to 6, wherein the at least one layer a) has a thickness of ≥ 20 to ≤ 100 µm, particularly preferably of ≥ 25 to ≤ 75 µm.

8. Layer construction according to Claims 1 to 7, wherein the at least one layer b) comprises at least one thermoplastic selected from polymers of ethylenically unsaturated monomers and/or polycondensates of bifunctional reactive compounds, preferably one or more polycarbonate(s) or copolycarbonate(s) based on diphenols, poly- or copolyacrylate(s) and poly- or copolymethacrylate(s), poly- or copolymer(s) of styrene, polyurethane(s) and polyolefin(s), poly- or copolycondensate(s) of terephthalic acid, poly- or copolycondensates of naphthalenedicarboxylic acid, poly- or copolycondensate(s) of at least one cycloalkyldicarboxylic acid, polysulfones or mixtures thereof, particularly preferably one or more polycarbonate(s) or copolycarbonate(s) based on diphenols or blends containing at least one polycarbonate or copolycarbonate.

9. Layer construction according to Claims 1 to 8, wherein said construction contains one or more further layer(s) c) comprising at least one thermoplastic and this at least further layer c) has a light transmittance of ≥ 85% to ≤ 98%, ≥ 87% and ≤ 95%, particularly preferably of ≥ 88% and ≤ 92%, determined according to ISO 13468-2:2006-07.

10. Layer construction according to Claims 1 to 9, wherein the layer construction comprises a further layer c) containing one or more polycarbonate(s) or copolycarbonate(s) based on diphenols, preferably copolycarbonate(s) based on diphenols.

11. Layer construction according to Claims 1 to 9, wherein the at least one layer a), at least one layer b) and/or the one or more layers c) contain at least one laser-sensitive additive, preferably black pigment, particularly preferably carbon black.

12. Layer construction according to Claims 1 to 10, wherein at least one electronic component, volume hologram and/or embossed hologram is arranged between layer a) and layer b).

13. Process for producing a layer composite comprising
- providing a layer construction according to Claims 1 to 10,
- optionally placing one or more electronic components, one or more volume holograms and/or one or more embossed holograms between the layers a) and b),
- stamping at least one opening in layer a),
- optionally providing one or more further layers c) comprising at least one thermoplastic,
- laminating the layer construction at a temperature of 120°C to 210°C, preferably of 130°C to 205°C, particularly preferably of 165°C to 200°C, and a pressure of 10 N/cm² to 400 N/cm², preferably of 30 N/cm² to 300 N/cm², particularly preferably of 40 N/cm² to 250 N/cm².

14. Security document, preferably identification document, comprising at least one layer construction according to any of Claims 1 to 11.

15. Use of a layer construction according to Claim 1 containing an opaque layer a) containing one or more polycarbonate(s) or copolycarbonate(s) based on diphenols having a light transmittance of ≥ 0.1% and ≤ 85%, preferably of ≥ 1% and ≤ 65%, particularly preferably of ≥ 2% and ≤ 50%, determined according to ISO 13468-2:2006-07, **characterized in that** the Vicat softening temperature B/120 determined according to ISO 306:2004 (method B120 50N; 120°C/h) of the one or more polycarbonate(s) or copolycarbonate(s) of layer a) is ≥ 156°C, preferably from ≥ 156°C to ≤ 250°C, particularly preferably from ≥ 156°C to ≤ 230°C, to produce windows in security documents, preferably identification documents.

## Revendications

1. Structure stratifiée comprenant au moins
a) une couche a) opaque contenant un ou plusieurs polycarbonate(s) ou copolycarbonate(s) à base de diphénols, de préférence des copolycarbonate(s) à base de diphénols, la couche a) présentant une transmission de lumière ≥ 0,1% et ≤ 85%, de préférence ≥ 1% et ≤ 65%, de manière particulièrement préférée ≥ 2% et ≤ 50%, déterminée selon la norme ISO 13468-2:2006-07, et
b) une autre couche b) transparente contenant au moins un matériau synthétique thermoplastique, ladite au moins une autre couche b) présentant une transmission de lumière ≥ 85% et ≤ 98%, de préférence ≥ 87% et ≤ 95%, de manière particulièrement préférée ≥ 88% et ≤ 92%,
déterminée selon la norme ISO 13468-2:2006-07, **caractérisée en ce que** la température de ramollissement Vicat B/120, déterminée selon la norme ISO 306:2004 (méthode B120 50 N ; 120°C/h), dudit un ou desdits plusieurs polycarbonate(s) ou copolycarbonate(s) de la couche a) est ≥ 156°C, de préférence de ≥ 156°C à ≤ 250°C, de manière particulièrement préférée de ≥ 156°C à ≤ 230°C et **en ce que** la température de ramollissement Vicat B/120, déterminée selon la norme ISO 306:2004 (méthode B120 50 N ; 120°C/h), est supérieure à celle du matériau synthétique de la couche b),
ladite au moins une couche a) comprenant au moins une ouverture et présentant une épaisseur de couche de ≥ 10 à ≤ 150 um.

2. Structure stratifiée selon la revendication 1, ladite au moins une couche b) comprenant un matériau synthétique thermoplastique qui présente une température de ramollissement Vicat B/120, déterminée selon la norme ISO 306 (50 N ; 50°C/h), dans une plage de ≥ 135°C à ≤ 155°C, de préférence de ≥ 140°C à ≤ 151°C.

3. Structure stratifiée selon la revendication 1 ou 2, ledit un ou lesdits plusieurs polycarbonate(s) ou copolycarbonate(s) à base de diphénols dans la couche a) comprenant au moins un motif structural carbonate de formule (I-1), (I-2), (I-3) et/ou (1-4) 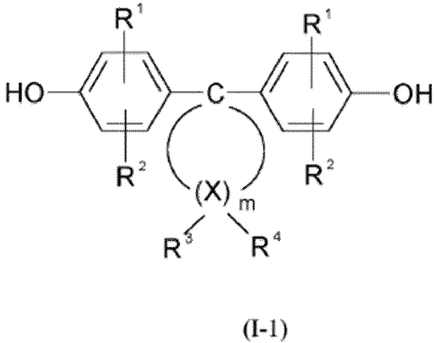 dans laquelle
R¹ et R², indépendamment l'un de l'autre, signifient hydrogène, halogène, de préférence chlore ou brome, C₁-C₈-alkyle, C₅-C₆-cycloalkyle, C₆-C₁₀-aryle, de préférence phényle, et C₇-C₁₂-aralkyle, de préférence phényl-C₁-C₄-alkyle, en particulier benzyle,
m signifie un nombre entier de 4 à 7, de préférence 4 ou 5,
R³ et R⁴, pouvant être choisis individuellement pour chaque X, signifient indépendamment l'un de l'autre hydrogène ou C₁-C₆-alkyle et
X signifie carbone,
étant entendu que sur au moins un atome X, R³ et R⁴ signifient simultanément alkyle, 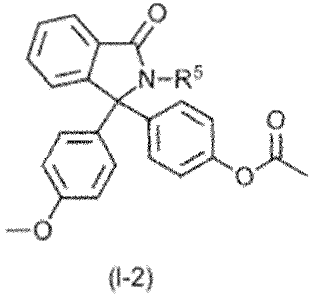 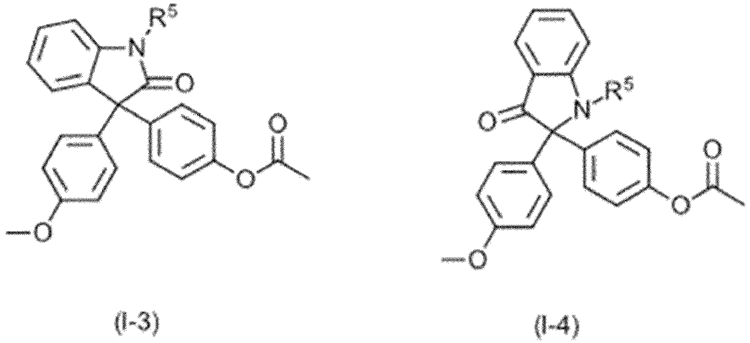
dans lesquelles R⁵ représente un radical C₁-C₄-alkyle, un radical aralkyle ou un radical aryle, de préférence un radical méthyle ou phényle, de manière tout particulièrement préférée un radical méthyle.

4. Structure stratifiée selon la revendication 3, ledit un ou lesdits plusieurs polycarbonate(s) ou copolycarbonate(s) à base de diphénols dans la couche a) comprenant au moins un motif structural carbonate de formule (I-1).

5. Structure stratifiée selon la revendication 1 à 4, ladite au moins une ouverture de la couche a) n'étant pas remplie en plus d'un matériau thermoplastique.

6. Structure stratifiée selon la revendication 1 à 5 ladite au moins une couche a) comprenant une charge, de préférence un pigment blanc, de manière particulièrement préférée du dioxyde de titane, du dioxyde de zirconium et/ou du sulfate de baryum, de manière tout particulièrement préférée du dioxyde de titane.

7. Structure stratifiée selon la revendication 1 à 6, ladite au moins une couche a) présentant une épaisseur de ≥ 20 à ≤ 100 um, de manière particulièrement préférée de ≥ 25 à ≤ 75 um.

8. Structure stratifiée selon la revendication 1 à 7, ladite au moins une couche b) comprenant au moins un matériau thermoplastique choisi parmi les polymères de monomères éthyléniquement insaturés et/ou les produits de polycondensation de composés réactifs bifonctionnels, de préférence un ou plusieurs polycarbonate(s) ou copolycarbonate(s) à base de diphénols, polyacrylate(s) ou copolyacrylate(s) et polyméthacrylate(s) ou copolyméthacrylate(s), polymère(s) ou copolymère(s) avec du styrène, polyuréthane(s), ainsi que polyoléfine(s), produit(s) de polycondensation ou de copolycondensation de l'acide téréphtalique, produit(s) de polycondensation ou de copolycondensation de l'acide naphtalènedicarboxylique, produit(s) de polycondensation ou de polycondensation d'au moins un acide cycloalkyldicarboxylique, polysulfone(s) ou des mélanges de ceux-ci, de manière particulièrement préférée un ou plusieurs polycarbonate(s) ou copolycarbonate(s) à base de diphénols ou mélanges contenant au moins un polycarbonate ou copolycarbonate.

9. Structure stratifiée selon la revendication 1 à 8, une ou plusieurs autre(s) couche(s) c) comprenant au moins un matériau synthétique thermoplastique étant contenue(s) et cette au moins une autre couche c) présentant une transmission de lumière de ≥ 85% à ≤ 98%, ≥ 87% et ≤ 95 %, de manière particulièrement préférée ≥ 88 % et ≤ 92% déterminée selon la norme ISO 13468-2:2006-07.

10. Structure stratifiée selon la revendication 1 à 9, la structure stratifiée comprenant une autre couche c) contenant un ou plusieurs polycarbonate(s) ou copolycarbonate(s) à base de diphénols, de préférence copolycarbonate(s) à base de diphénols.

11. Structure stratifiée selon la revendication 1 à 9, ladite au moins une couche a), ladite au moins une couche b) et/ou ladite une ou lesdites plusieurs couches c) comprenant au moins un additif sensible au laser, de préférence un pigment noir, de manière particulièrement préférée de la suie.

12. Structure à couches selon la revendication 1 à 10, au moins un composant électronique, hologramme volumique et/ou hologramme estampé étant agencé entre la couche a) et la couche b).

13. Procédé de fabrication d'un composite stratifié, comprenant
- la mise à disposition d'une structure stratifiée selon la revendication 1 à 10,
- le cas échéant le placement d'un ou de plusieurs composants électroniques, d'un ou de plusieurs hologrammes volumiques et/ou d'un ou de plusieurs hologrammes estampés entre les couches a) et b),
- découpage d'au moins une ouverture dans la couche a),
- le cas échéant mise à disposition d'une ou de plusieurs couches c) comprenant au moins un matériau synthétique thermoplastique,
- laminage de la structure stratifiée à une température de 120°C à 210°C, de préférence de 130°C à 205°C, de manière particulièrement préférée de 165°C à 200°C et à une pression de 10 N/cm² à 400 N/cm², de préférence de 30 N/cm² à 300 N/cm², de manière particulièrement préférée de 40 N/cm² à 250 N/cm².

14. Document de sécurité, de préférence document d'identification, comprenant au moins une structure stratifiée selon l'une des revendications 1 à 11.

15. Utilisation d'une structure stratifiée selon la revendication 1, contenant une couche a) opaque scontenant un ou plusieurs polycarbonate(s) ou copolycarbonate(s) à base de diphénols, présentant une transmission de lumière ≥ 0,1% et ≤ 85%, de préférence ≥ 1% et ≤ 65%, de manière particulièrement préférée ≥ 2% et ≤ 50%, déterminée selon la norme ISO 13468-2:2006-07, **caractérisée en ce que** la température de ramollissement Vicat B/120, déterminée selon la norme ISO 306:2004 (méthode B120 50N ; 120°C/h) dudit un ou desdits plusieurs polycarbonate(s) ou copolycarbonate(s) de la couche a) est ≥ 156°C, de préférence de ≥ 156°C à ≤ 250°C, de manière particulièrement préférée de ≥ 156°C à ≤ 230°C, pour la fabrication de fenêtres dans des documents de sécurité, de préférence des documents d'identification.
